# EUROPEAN PATENT APPLICATION

(11) **EP 1 580 198 A1**
(43) Date of publication of application: **28.09.2005**
(21) Application number: 05251509.5
(22) Date of filing: 12.03.2005
(51) Int. Cl.: C08F 2/02

(54) **A continuous process for preparing polymers**

(30) Priority: 25.03.2004 US 556446 P
(71) Applicant: ROHM AND HAAS COMPANY, Pennsylvania 19106-2399 (US)
(72) Inventor: McFadden, Dawn Marie, Newtown, PA 18940 (US)
(74) Representative: Buckley, Guy Julian

(57) **Abstract**

A process for preparing polymers by continuous bulk polymerization in non-cylindrical channels is disclosed.

## Description

This invention relates to a process for preparing polymers, in particular to a continuous bulk polymerization process for preparing polymers.

Polymers are typically commercially prepared in batch processes. A disadvantage of batch processes is that they require several hours, in some cases greater than eight hours, to feed the reactants, including monomer, into the reactor, conduct the polymerization reaction, cool the resulting polymer, remove the polymer, and clean the reactor. A further disadvantage of batch processes is the high cost of commercial reaction vessels, which results from the large reactor size required to hold the polymerization process reactants.

To overcome the deficiencies of the batch process, continuous polymerization processes have been developed. In a continuous process, monomer and other reactants are continuously fed into the reactor while polymer is simultaneously continuously removed from the reactor. Continuous processes provide advantages over batch processes in that they are more efficient, and thus may produce more product per day, while utilizing smaller, less expensive reactors. Continuous processes utilizing continuous stirred tank reactors or tubular reactors are two types of continuous process. Continuous tubular reactors, in which monomers are polymerized in a cylindrical channel immersed in a temperature control medium, suffer from the disadvantage of being extremely long. In some cases, the length of the tubular reactor extends to greater than 200 meters. The extensive length of the tubular reactor is due, in part, to the need for a narrow cylindrical channel in order to facilitate good heat exchange between the temperature control medium and the reactants. The long tubes are also required because the flowrate in the reactor must be high enough to prevent the pluggage problems commonly associated with tubular reactors. While high flow rates help to alleviate pluggage, they result in the need to extend the length of the tubular reactor, to ensure sufficient residence time and heat transfer.

United States Patent No. 6,252,016 overcomes some of the problems associated with continuous polymerization in a tubular reactor. The patent discloses a continuous polymerization process in which a monomer is continuously fed to one or more non-cylindrical channels in which the monomer is polymerized by emulsion, solution, or suspension polymerization , and the polymer is continuously removed from the non-cylindrical channel. During the polymerization process, the non-cylindrical channels, which can be certain types of heat exchanger, are exposed to a temperature control medium. However, the patent does not disclose polymerization of the monomer utilizing bulk polymerization.

Japanese Patent No. 2004803 discloses a continuous bulk polymerization device in which one or more plate-fin heat exchanger units containing a reaction solution passage, and a heat medium passage are installed inside a cylindrical reaction vessel. However, the patent does not disclose a continuous bulk polymerization in which the heat exchanger units are not inside the reaction vessel.

During bulk polymerization processes, monomers are converted into polymer without the aid of a solvent. Due to the absence of solvent, bulk polymerization tends to involve reactants and products having a viscosity significantly higher than those utilized in emulsion, solution, or suspension polymerization. The flow rate of material through a heat exchanger is dependent, in large part, on the viscosity of the material. When a heat exchanger is utilized for a polymerization process in which the reactants, or the reaction product, are particularly viscous, such as is the case with bulk polymerization, one of ordinary skill in the art would expect high back pressures on the process side of the heat exchanger. This expectation would be due, in part, to the tortuous reactant path through the heat exchanger, and the anticipation of low temperatures, and thus high viscosity, near the walls of the channels, due to exposure of a surface of the channel walls to a cooling medium. Applicants have found that the heat transfer capability of their invention is such that it is possible to achieve a small enough temperature difference between the process material, and the cooling medium, that the viscosity of the process material is substantially uniform across the cross sectional area of the noncylindrical channels.

Applicants have unexpectedly found a process by which polymeric compositions can be continuously made by bulk polymerization in non-cylindrical channels, while maintaining or improving productivity and monomer conversion, at equivalent flowrates, over the productivity and conversion achievable utilizing emulsion, solution, or suspension polymerization.

The present invention provides a continuous bulk polymerization process for preparing polymers comprising: providing at least one reaction mixture comprising at least one monomer, wherein the reaction mixture contains substantially no solvent; continuously feeding the reaction mixture to at least one non-cylindrical channel; polymerizing the monomer in the non-cylindrical channel; and continuously removing the polymer from the non-cylindrical channel; wherein the temperature of the reaction mixture is controlled, and wherein the non-cylindrical channel is not inside a reaction vessel.

The process of the present invention is directed toward a continuous bulk polymerization process for preparing polymers. By "bulk polymerization" is meant herein the conversion of monomer into polymer without the aid of solvent. By "solvent" is meant herein a substance, other than monomer, that dissolves the monomer to form a solution. The continuous bulk polymerization takes place in the non-cylindrical channel. By "non-cylindrical" is meant herein any shape whereby the reactants, and the temperature control medium, are exposed to a greater surface area, for a given length, than a cylindrical shape. The larger contact area between the reaction mixture and the temperature control medium allows for improved temperature control, and greater heat removal capability, which enables the control of the temperature control medium within a few degrees of the desired process temperature. Thus, it is possible to control the temperature of the reaction mixture such that the entire reaction mixture temperature is virtually uniform, thereby avoiding high viscosities near the non-cylindrical channel walls, as well as the reduced flowrates and high backpressures associated with such high viscosities.

A further advantage afforded by the present invention is that the process does not require the use of a reaction vessel. By "reaction vessel" is meant a container, such as the tanks typically used for polymerization processes, in which a polymerization reaction is taking place. As noted herein-above, others have performed bulk polymerization in a conventional reaction vessel containing plate-fin heat exchangers. The non-cylindrical channel of the present invention is not inside a reaction vessel. Applicants have found that the heat transfer capabilities of their invention are such that a reaction vessel is not required. The entire polymerization process can be performed in the non-cylindrical channels. Where needed, a reaction vessel may be used before or after the non-cylindrical channel. However, since the cost of reaction vessels can be extremely high, their omission from the polymerization process allows for significant cost savings.

During the continuous bulk polymerization process, the reaction mixture is continuously fed to the non-cylindrical channel, where it is reacted to form a polymer which is continuously removed from non-cylindrical channel. The temperature of the reaction mixture is controlled during the polymerization process. Preferably, the reaction temperature is continuously controlled. The process may be operated at any temperature. The temperature typically ranges from 0°C to 350°C, preferably 150°C to 250°C, more preferably 180 to 240°C. A temperature control medium is utilized to control the process temperature. The temperature control medium may be a solid, gas or liquid. A typical gas medium may be, for example, air. Liquid medium may be, for example, water, brine, or glycol solvents such as ethylene glycol, diethylene glycol, propylene glycol, dipropylene glycol, thermoset oil, silicone oil, and the like. Solid medium may be, for example, an electrically heated metal plate. It is preferable that the temperature control medium be a liquid.

In one embodiment of the invention, the temperature of the reaction mixture is controlled by exposing the internal surface of the non-cylindrical channel to the reaction mixture, while simultaneously exposing the external surface of the non-cylindrical channel to a temperature control medium. The non-cylindrical channels can be immersed in the temperature control medium by methods known in the art, such as simply exposing to air, placing them in a forced air oven, or placing them in a bath containing liquid or solid temperature control medium.

In the preferred embodiment of the invention, the non-cylindrical channel is in heat transfer proximity with the another channel containing the temperature control medium. By "in heat transfer proximity" is meant herein, the channels are close enough together to provide sufficient heat input and heat removal to control polymerization of the monomer. By way of example only, the reaction mixture temperature may be controlled by feeding a temperature control medium to non-cylindrical channels alternating with the non-cylindrical channels containing the reaction mixture. By "alternating" is meant herein, the non-cylindrical channel containing the reaction mixture is located next to at least one channel containing the temperature control medium. The non-cylindrical channels containing the reaction mixture may share a common wall with the channels containing the temperature control medium, or the channels may have separate walls. It is preferable that the flow of the temperature control medium be opposite to the flow of the reaction mixture.

The width of the non-cylindrical channel, and the channel surface area with which the reaction mixture contacts, are such that sufficient heat transfer takes place between the reaction mixture and the non-cylindrical channel's surface to control the polymerization. Suitable cross-sectional shapes of the non-cylindrical channel include, for example, oval, ellipse, square, rectangular, triangular, and polygonal. The non-cylindrical channels are constructed of any material suitable for forming into the non-cylindrical shape, and capable of providing sufficient heat transfer from a temperature control medium. Such materials include, for example plastics such as polycarbonate and polypropylene, stainless-steel types 304 and 316; titanium, Monel, Incoloy 825, Hastelloy C, phosphor bronze, and cupronickel. In addition, the portion of the non-cylindrical channel exposed to the reaction mixture may be coated with materials such as graphite or polytetrafluoroethylene to aid in flow.

In one embodiment of the invention, more than one non-cylindrical channel is used. In this embodiment, the non-cylindrical channels may be the same, or different length, and may be run in series, or in parallel. Each non-cylindrical channel may be run at different reaction conditions, such as at different temperature or pressure conditions.

The reaction mixture is fed to the non-cylindrical channel, and flows through the noncylindrical channel at a rate sufficient to polymerize the monomer. The residence time of the reaction mixture in the non-cylindrical channel is typically less than 30 minutes, preferably less than 20 minutes. The flow rate may be adjusted based on the desired residence time in the non-cylindrical channel, and the total surface area of the non-cylindrical channel. In general, the higher the total surface area of the non-cylindrical channel, the faster the flow rate may be. The polymer is continuously removed through an outlet of the non-cylindrical channel.

The non-cylindrical channel has one or more outlets, and one or more inlets. In one embodiment of the invention, the non-cylindrical channel has two inlets, which enables the addition of two different reaction mixtures at different points in the non-cylindrical channel.

In another embodiment of the invention, the reaction mixture is fed through a series of non-cylindrical channels, for example, the reaction mixture may be fed through one non-cylindrical channel, and then through at least one second non-cylindrical channel, which is connected to the first non-cylindrical channel. There may be inlets between the connected non-cylindrical channels to allow a different reaction mixture to be fed at a different point in the process to a separate non-cylindrical channel. In a different embodiment of the invention, the reaction mixture is simultaneously fed into the inlets of non-cylindrical channels that are arranged in parallel. In this embodiment, the parallel non-cylindrical channels may have additional inlets to the non-cylindrical channels, allowing a different reaction mixture to be fed at a different point in the process, to separate non-cylindrical channels. The polymer may be removed from the outlet of the non-cylindrical channel, or it may be fed from the outlet of one non-cylindrical channel into one or more inlets of separate non-cylindrical channels.

In the embodiments of the invention in which more than one non-cylindrical channel is used, the different non-cylindrical channels may be run at different temperature or pressure conditions.

The polymerizations may occur through addition or condensation reactions. Addition reactions include free radical, anionic, and cationic polymerizations. Bulk polymerizations prepared by the process of this invention can be single stage or multi-stage. By "multi-stage" is meant herein that different monomers, different monomer mixtures, or more of the same monomer, are fed to the non-cylindrical channel at different locations along the length of the non-cylindrical channel. The polymerization process may be operated under vacuum as low as 25 mm Hg, or at pressures of up to 5,000 psi.

The non-cylindrical channel can be a heat exchanger. In one embodiment of the invention, the non-cylindrical channel is part of a plate-frame heat exchanger. This type of heat exchanger contains standard flat or corrugated plates that are supported by a frame. Corrugated plates are preferred due to improved mixing of the monomer with the other reactants. The plates serve as heat exchange surfaces and may be made of, for example, stainless-steel types 304 and 316, titanium, Monel, Incoloy 825, Hastelloy C, phosphor bronze, and cupronickel. The plates may be coated with materials such as graphite or polytetrafluoroethylene. The plates form alternating non-cylindrical channels for the reaction mixture and the temperature control medium to flow through. For the prevention of leakage, gaskets located between the plates, and where the plate and the frame meet, may be utilized, or the plates may be welded together. The frame may be made, for example, of clad stainless steel or enamel-coated mild steel.

In a different embodiment of the invention, the non-cylindrical channel is part of a plate-fin heat exchanger. This type of heat exchanger is similar to the plate-frame heat exchanger, but has a stack of layers, each layer consisting of a corrugated fin between flat metal sheets. The sheets are sealed off on two sides by channels or bars to form separate passages for the flow of the reaction mixture and the temperature control medium. The temperature control medium may flow counter-current to or co-current with the reaction mixture.

In yet another embodiment of the invention, the non-cylindrical channel is part of a spiral-plate heat exchanger. This type of heat exchanger is made from a pair of plates rolled to provide long rectangular passages for the temperature control medium and the reaction mixture in counter-current or co-current flow.

The reaction mixture contains substantially no solvent. Once a particular bulk polymerization process has been completed, it is not practicable to leave residual monomer in the reaction system, as this can polymerize and cause fouling. Thus, during process shutdown, the polymerization system is typically flushed with solvent after completion of each process run. At the start of the next process startup, the solvent is displaced from the process system by the entering reaction mixture. The vast majority of the solvent is purged from the non-cylindrical channel. A small amount of residual solvent remains in the system, and becomes admixed with the reaction mixture. No additional solvent is added to the reaction mixture during the bulk polymerization process. By "substantially no solvent" is meant that no solvent is fed to the non-cylindrical channel, other than the residual solvent that is present in the non-cylindrical channel as part of the startup procedure. Typically the residual monomer is present in quantities of no more than 3 weight percent, preferably no more than 2 weight percent, more preferably no more 1 weight percent, and most preferably no more than 0.3 weight percent, based on the weight of the total reaction mixture. The absence of significant amounts of solvent contributes toward improved productivity. Since the non-cylindrical channel volume is not being occupied by solvent, there is more monomer available for reaction in the non-cylindrical channel, and thus more polymer product can be produced per unit time than is possible utilizing polymerization processes that require the use of solvent. The absence of solvent also contributes toward improvements in conversion rates over those obtainable when utilizing processes that require the use of solvent. As noted herein-above, one would expect the flowrates in the non-cylindrical channel to be significantly lower for a bulk polymerization process than for processes that utilize solvent. Applicants have found that due to the heat transfer capabilities of the invention, it is possible to attain reaction mixture flowrates, at equivalent, or nearly equivalent backpressures, that are at least equivalent to those of a polymerization process that utilizes solvent. Since, at equivalent flowrates, the residence time of the monomer with substantially no solvent is higher than that of the monomer with solvent, it is possible to achieve improvements in monomer conversion.

Further improvements in conversion are achievable by retrieving a portion of the unpolymerized material exiting the non-cylindrical channel, and recycling it back into the inlet of the non-cylindrical channel. In one embodiment of the invention, the remaining polymeric product is isolated as a solid or neat liquid, and collected. In a different embodiment, the remaining polymeric product is dissolved in an appropriate solvent prior to collection. Bulk polymerization provides an advantage, in that, it allows later-addition of any choice of solvent, rather than limitation to a solvent suitable for the polymerization reaction. Use can be made of the sensible heat of the product mixture to aid in the dissolution of the polymer product.

The temperature control medium can be utilized to transfer the reaction exotherm energy to preheat the reaction mixture, and hold the polymer product at temperature, while removing the unpolymerized material, ending up with an energy neutral or nearly energy neutral process under steady state.

The reaction mixture contains at least one monomer. The reaction mixture may be a mixture of the monomer and at least one initiator. Suitable monomers include, for example, ethylenically unsaturated monomers such as, for example, acrylic esters such as methyl (meth)acrylate, ethyl acrylate, butyl (meth)acrylate, 2-ethylhexyl acrylate, decyl (meth)acrylate, hydroxyethyl (meth)acrylate, and hydroxypropyl (meth)acrylate; acrylamide or substituted acrylamides; styrene or substituted styrenes; ethylene, propylene, butadiene; vinyl acetate or other vinyl esters; vinyl monomers such as vinyl chloride, vinylidene chloride, N-vinyl pyrolidone; and acrylonitrile or methacrylonitrile. Copolymerizable ethylenically unsaturated acid monomers such as, for example, (meth)acrylic acid, crotonic acid, phosphoethyl methacrylate, 2-acrylamido-2-methyl-1-propanesulfonic acid, sodium vinyl sulfonate, itaconic acid, fumaric acid, maleic acid, monomethyl itaconate, monomethyl fumarate, monobutyl fumarate, maleic anhydride and salts thereof may also be used. Preferred monomers are ethyl acrylate, 2-ethyl hexylacrylate, and vinyl acetate. More preferred monomers are styrene, α-methyl styrene, substituted styrene, butyl acrylate, methyl methacrylate, (meth)acrylic acid, and mixtures thereof. "(Meth)acrylate", as used herein, means acrylate or methacrylate. "(Meth)acrylic", as used herein, means acrylic or methacrylic.

The method of initiation is not critical to the process of the invention. Preferably, initiation is effected through the use of thermal or redox initiation. Conventional free radical initiators may be used, such as, for example, peroxygen compounds, including inorganic persulfate compounds such as ammonium persulfate, potassium persulfate, and sodium persulfate; peroxides such as hydrogen peroxide; organic hydroperoxides such as cumene hydroperoxide and t-butyl hydroperoxide; organic peroxides such as benzoyl peroxide, acetyl peroxide, lauroyl peroxide, peracetic acid, and perbenzoic acid; as well as other free-radical producing materials such as 2,2'-azobisisobutyronitrile, and other azo compounds. These free radical initiators are typically used at a level of 0.05% to 5% by weight, based on the weight of total monomer. Redox systems using the same initiators coupled with a suitable reductant (activator), such as, for example, isoascorbic acid, sodium sulfoxylate formaldehyde, or sodium bisulfite may be used at similar levels. Ferrous sulfate and other metal ions can be used as promoters at similar levels. Other suitable methods of initiation, such as, the use of irradiation with ultra violet light, electron beam irradiation, gamma irradiation, or ultrasonic or mechanical means to induce free-radical generation, are deemed to be within the scope of this invention.

The following examples illustrate a continuous bulk polymerization process.
Abbreviations used throughout are:
g = grams
Ib = pounds
% = percent
n = normal
°C = degrees Centigrade
DI = deionized
mm = millimeters
Psig = pounds per square inch gage
ml = milliliters
min = minutes
ml/min = milliliters per minute
g/min = grams/min
L = liters
gal = gallon
DPM = dipropylene glycol methyl ether
GAA = glacial acrylic acid
AMS = α-methyl styrene
Sty = styrene
2-EHA = ethylhexyl acrylate
DTBP = di-tertiary butyl peroxide
DTAP = di-t-amyl peroxide
Acid # = (ml of KOH used for titration)* (KOH normality) ÷ (sample weight)
MW = weight average molecular weight
MN = number average molecular weight
GC = gas chromatography (as determined by a Tekmar 7000 headspace unit in conjunction with an Hewlett Packard 5890 chromatograph)
GPC = gel permeation chromatography (as determined by a Waters 590 pump system, with a Waters 410 refractive index detector)
NMR = nuclear magnetic resonance (as determined by a Varian 600)
Mono. Conv. = monomer conversion = (weight polymer)/(weight monomer)
yield = (weight of polymer product)/(weight of fresh feeds)
Meq = milliequivalents

For all examples, the reaction system was preheated to 200°C, while circulating DPM through the process lines. The DPM was pumped from the 2 gal solvent tank, through the monomer feed pump(s) and mass meter(s), to the pre-heater(s) and reactor(s). The solvent was cooled and collected. The recirculating oil system was set to 200°C and fed to the utility side of the pre-heater and reactors. After completion of each experiment, the monomer feeds were switched to solvent to flush the equipment.

### EXAMPLE 1

The temperature set point on the pipe-in-pipe pre-heater was set to 150°C. The reactor temperature was allowed to equilibrate in two Tranter Maxchanger, Model #-MX-06-0424-HP-012, plate-frame heat exchangers (Reactor 1 and Reactor 2), in series. The heat exchangers had been modified to have 2 process channels, by 5 process passes, and custom Klingersil^{TM} gaskets. In this configuration each reactor had a nominal volume of 1600 ml, and an average residence time of 10 minutes, for a total of 20 minutes at 160 ml/min of flow.

The monomer 1 feed control loop was set to 158.1 g/min, while pumping solvent. The temperature set point on the oil to the pre-heater was set to 150°C. An initiator solution of 300 g DTBP was charged to the 1 gal initiator tank. A monomer solution was made by combining the following materials: 1138.7 g Sty, 1017.2 g AMS, and 844.1 g GAA. The monomer solution was well mixed, and charged to the 2 gal monomer feed tank. During the polymerization process, when the level in these tanks became low, a new batch of raw materials was charged. The initiator flow control loop was turned on to feed 1.9 g/min of the initiator solution to the injection point after the monomer 1 pre-heater. After 15 minutes, the monomer pump feed source was switched from the solvent tank to the monomer tank. The oil system set point was increased to 232°C. The outlet process temperature of reactor 1 was set to 228°C and the outlet process temperature of reactor 2 was set to 223°C.

After 15 minutes, the process stream was valved over from the Grove^{TM} valve, to the Badger^{TM} pressure regulating valve, through the line expansion, into the flash column, and then to downstream processing. The pressure control loop, which was a pressure transducer in the line before the pre-heater and the Badger valve, was set to 95 psig. The oil jacket on the line expansion after the Badger™ valve was set to 185°C. The flash vapor temperature was set to 180°C. The condenser on the flash vapor outlet stream was set to 85°C. The flash condensate was pumped to a recycle tank for collection. The remaining condensable vapor stream was collected in vacuum traps packed in dry ice. The flash melt temperature was set to 190°C. The vacuum set point on the flash column was reduced from 0 psig to -10.0 psig over 45 minutes. 5 minutes after reaching the vacuum setpoint, the vacuum trap was switched to the empty run trap for collection. 90 minutes after reaching the vacuum setpoint, the flash condensate stream (A) and polymer (B) were sampled. The polymer was then collected for 10 minutes, and weighed. The average product rate was 149.4 g/min. The yield calculated to 93.5%. 30 minutes later the flash condensate stream (C) and polymer (D) were sampled again. The polymer was then collected for 10 minutes and weighed. The average product rate was 147.8 g/min. The yield calculated to 93.5%. The vacuum trap was switched from the run trap and the monomer feeds were switched back to DPM. The average accumulation in the recycle tank was 8.8 g/min. The average accumulation in the vacuum trap under run conditions was 1.36 g/min.
The polymer was characterized using NMR for composition, and GPC for MW and MN. The residual monomers in the polymer and the condensate streams were characterized using GC. This data was used to calculate the stream composition of the material exiting the reactors.

**TABLE 1 -**

| REACTOR EXIT MATERIAL CHARACTERIZATION | | | | | | | | |
|---|---|---|---|---|---|---|---|---|
| Example | Example 1 | | Example 2 | Example Comp3 | | Example 4 | Example Comp5 | |
| Sample | A/B | C/D | E/F | G/H | l/J | K/L | M/N | O/P |
| Poly Sty | 35.9% | 36.0% - | 32.7% | 29.7% | 30.33% | 33% | 29.7% | 29.7% |
| Poly AMS | 29.5% | 29.4% | 32.9% | 29.5% | 29.96% | 32% | 28.9% | 29.0% |
| Poly AA | 26.8% | 26.8% | 25.9% | 26.1% | 26.65% | 2.8% | 25.3% | 25.5% |
| Styrene | 1.4% | 1.4% | 1.2% | 1.5% | 1.46% | 2% | 1.8% | 2.3% |
| AMS | 3.9% | 4.0% | 5.0% | 4.2% | 4.04% | 3% | 3.0% | 3.4% |
| AA | 0.9% | 0.9% | 0.7% | 0.8% | 0.73% | 1% | 1.1% | 1.3% |
| DPM | 0.0% | 0.0% | 0.2% | 4.8% | 3.49% | 0.0% | 7.3% | 5.4% |
| Other | 1.6% | 1.5% | 1.6% | 3.5% | 3.34% | 1.5% | 3.0% | 3.4% |
| Mono Conv | 93.8% | 93.6% | 98.0% | 92.9% | 98.67% | 94% | 93.4% | 92.3% |
| Poly MN | 4,160 | 4,095 | 4,538 | 3,827 | 3,692 | 4,100 | 3,963 | 3,706 |
| Poly MW | 9,419 | 9,448 | 9,496 | 8,290 | 8,084 | 9,100 | 8,264 | 7,914 |
| NOTE: "Comp" means comparative example. | | | | | | | | |

### EXAMPLE 2

The same equipment set-up as Example 1 was used.

The monomer 1 feed control loop was set to 158.1 g/min while pumping solvent. The temperature set point on the oil to the pre-heater was set to 150°C. An initiator solution of 300 g DTBP was charged to the initiator tank. A monomer solution was made by combining the following materials: 1062.75 g Sty, 1093.12 g AMS, and 844.13 g GAA. The monomer solution was well mixed, and charged to the monomer feed tank. During the polymerization process, when the level in these tanks became low, a new batch of raw materials was charged. The initiator flow control loop was turned on to feed 1.9 g/min of the initiator solution to the injection point after the pre-heater. After 4 minutes, the monomer pump feed source was switched from the solvent tank to the monomer tank. The oil system set point was increased to 232°C. The outlet process temperature of reactor 1 was set to 226°C, and the outlet process temperature of reactor 2 was set to 218°C.

After 10 minutes, the process stream was valved over from the Grove™ valve, to the Badger™ pressure regulating valve, through the line expansion, into the flash column, and then to downstream processing. The pressure control loop was set to 95 psig. The oil jacket on the line expansion after the Badger™ valve was set to 185°C. The flash vapor temperature was set to 180°C. The condenser on the flash vapor outlet stream was set to 90°C. The flash condensate was pumped to a recycle tank. The remaining condensable vapor stream was collected in vacuum traps packed in dry ice. The flash melt temperature was set to 190°C. The vacuum set point on the flash column was reduced from 0 psig to -10.5 psig over 60 minutes. 36 minutes after starting to use the flash column, the recycle tank was emptied, and then allowed to refill.

The monomer feed rate was adjusted to 150.1 g/min, 79 min after starting monomer feeds. The recycle feed pump, which enters the process stream before the pre-heater, was set to 8 g/min. These flows were then adjusted until the level in the recycle tank was approximately constant. The recycle feed rate averaged 9.2 g/min and the monomer feed averaged 148.9 g/min. 85 minutes after starting to incorporate the recycle stream, the flash condensate stream (E) and polymer (F) were sampled. The polymer was then collected for 10 minutes, and weighed. The average product rate was 156.6 g/min. The yield calculated to 98.1%.

### COMPARATIVE EXAMPLE 3

The same equipment set-up as Example 1 is used, except a 5 gal monomer tank replaces the 2 gal tank.

The monomer feed control loop was set to 156.2 g/min while pumping solvent. An initiator solution was prepared by combining 400 g DTBP and 400 g DPM. The initiator solution was well mixed and charged to the 1 gal initiator tank. A monomer solution was made by combining the following materials: 10.52 Ib Sty, 11.35 Ib AMS, 9.07 Ib GAA, 1.93 Ib DPM, and 0.2 Ib DI water. The monomer solution was well mixed, and charged to the 5 gal monomer feed tank. During the polymerization process, when the level in these tanks became low, a new batch of raw materials was charged. The initiator flow control loop was turned on to feed 3.84 g/min of the initiator solution to the injection point after the pre-heater. After 15 minutes, the monomer pump feed source was switched from the solvent tank to the monomer tank. The oil system set point was increased to 230°C. The outlet process temperature of reactor 1 was set to 228°C and the outlet process temperature of reactor 2 was set to 225°C.

After 15 minutes the process stream was valved over from the Grove^{TM} valve, to a Badger^{TM} pressure regulating valve, through a line expansion, into a flash column, and then to downstream processing. The pressure control loop was set to 90 psig. The oil jacket on the line expansion after the Badger valve was set to 220°C. The flash vapor temperature was set to 210°C. The condenser on the flash vapor outlet stream was set to 93°C. The flash condensate was pumped to a recycle tank. The remaining condensable vapor stream was collected in vacuum traps packed in dry ice. The flash melt temperature was set to 210°C. The vacuum set point on the flash column was reduced from 0 psig to -6.5 psig in small increments. Polymer melt product was pumped from the flash column by a gear pump, collected for 10 minutes, and weighed. The average polymer flow was 169.4 g/min

An aqueous ammonia solution was made by combining 0.72 Ib 29.5% ammonia hydroxide and 5.89 Ib DI water. The solution was mixed and charged to the 5 gal Aqueous ammonia tank. The aqueous ammonia feed pump was turned on to feed at 318.5 g/min. A pipe in pipe heat exchanger with steam on the utility side was used to pre-heat the aqueous ammonia to 85°C. This stream was fed to a Ross rotor stator mixer HSM-400DL. The heat tracing on the Ross mixer is set to 150°C. The polymer from the gear pump was maintained at 215°C while being diverted to the rotor stator mixer. The outlet of the rotor stator mixer was sent to a 3L continuous stirred tank reactor resulting in approximately 6.5 minutes of residence time and an agitator rate of 1500 rpm. The resulting solution was cooled in a heat exchanger, passed through a Grove^{TM} pressure regulating valve set at approximately 60 psig and collected in a 3 gal product tank. After 21 minutes a second aqueous ammonia solution was made by combining 0.64 Ib 29.5% ammonia hydroxide and 5.98 1b DI water. The solution was mixed and charged to the 5 gal Aqueous ammonia tank. As the level in the aqueous ammonia tank became low this solution was replenished. After approximately 1 hour of feeding the ammonia mixture, the polymer feed was diverted from the rotor stator mixer. The vacuum set point on the flash column was reduced from to -10.5 psig in small increments. The recycle tank was emptied and then allowed to refill with flash condensate. After approximately 1 hour the flash condensate stream (G) and the polymer (H) were sampled. The yield calculated to 86.7%. The average accumulation in the recycle tank was 16.2 g/min.

The polymer stream was directed back to the rotor stator mixer. The product solution was sampled every 10 minutes for the next hour. After 43 minutes the product solution was collected for 3 minutes and weighed. The average product solution flow was 457.3 g/min. The product solution was sampled every 15 minutes for the second hour. 160 minutes after starting to use the flash column the recycle tank was emptied and then allowed to refill.

55 minutes after restarting feeds to the rotor stator mixer, a new monomer solution comprised of 11.49 Ib Sty, 11.46 lb AMS, 10.04 Ib GAA, and 0.07 lb DI water was charged to the monomer feed tank. The monomer feed rate was adjusted to 142.3 g/min. The recycle feed pump which enters the process stream before the monomer pre-heater was set to 17.7 g/min. These flows were then adjusted until the level in the recycle tank was approximately constant.

93 minutes after starting the feed to the rotor stator mixer, the product solution was collected for 3 minutes and weighed. The average product solution flow was 446.7 g/min. After 2 hours feeding to the rotor stator mixer, the molten polymer stream was diverted back to solid collection. The flash condensate (I) and polymer (J) samples were collected at this time. The yield calculated to 97.8%. The vacuum trap was switched from the run trap and the monomer feeds were switched back to DPM. The recycle feed rate averaged 15.9 g/min and the monomer feed averaged 140.3 g/min. The average accumulation in the recycle tank while the recycle stream was being fed to the process was -1.86 g/min. The average accumulation in the vacuum trap under run conditions was 5 g/min.

### EXAMPLE 4

The same equipment set-up as Example 1 is used. Additionally, a second 2 gal monomer feed tank (monomer 2 feed tank) is added, along with a mass meter, pump, and pipe-in-pipe pre-heater. In this configuration, each reactor has a nominal volume of 1600 ml, and an average residence time of 11.6 minutes in reactor 1 at 138.4 ml/min, and 10 minutes of residence time in reactor 2 at 160 ml/min, for a total of 21.6 minutes.

The monomer 1 feed control loop is set to 136.5 g/min, and the monomer 2 feed pump is set to 21.6 g/min, while pumping solvent. The temperature set point on the oil to the pre-heater is set to 150°C. An initiator solution of 400 g DTBP is charged to the initiator tank. A monomer 1 solution is made by combining the following materials: 983 g Sty, 1236 g AMS, 782 g GAA. The monomer solution is well mixed, and charged to the monomer 1 feed tank. A monomer 2 solution is made by combining the following materials: 1494 g Sty, and 1506 g GAA. The solution is well mixed, and charged to the monomer 2 feed tank. During the polymerization process, when the level in these tanks becomes low, a new batch of raw materials is charged. The initiator flow control loop is turned on to feed 1.9 g/min of the initiator solution to the injection point after the monomer 1 pre-heater. After waiting 7 minutes, the monomer 1 pump feed source is switched from the solvent tank to the monomer 1 feed tank. The oil system set point is increased to 229°C. The outlet process temperature of reactor 1 is set to 225°C, and the outlet process temperature of reactor 2 is set to 225°C.

After 24 minutes, the process stream is valved over from the Grove^{TM} valve, to the Badger^{TM} pressure regulating valve, through the line expansion, into the flash column, and then to downstream processing. The pressure control loop is set to 95 psig. The oil jacket on the line expansion after the Badger^{TM} valve is set to 185°C. The flash vapor temperature is set to 180°C. The condenser on the flash vapor outlet stream is set to 50°C. The flash condensate is pumped to a recycle tank for collection. The remaining condensable vapor stream is collected in vacuum traps packed in dry ice. The flash melt temperature is set to 190°C. The vacuum set point on the flash column is reduced from 0 psig to -10.5 psig over 12 minutes. 90 minutes after switching the monomer 1 pump over to the monomer 1 feed tank, the monomer 2 feed pump is switched to the monomer 2 feed tank, so that monomer from monomer feed tank 1 is entering the system before the first reactor, and monomer from monomer feed tank 2 is entering the system between the first and second reactor. After waiting 30 minutes, the flash condensate stream (K) and polymer (L) are sampled. The yield is calculated to 94%.

### COMPARATIVE EXAMPLE 5

The same equipment set-up as Example 4 was used. In this configuration, each reactor has a nominal volume of 1600 ml, and an average residence time of 11.4 minutes in reactor 1 at 140 ml/min, and 10 minutes of residence time in reactor 2 at 160 ml/min, for a total of 21.4 minutes.

The monomer 1 feed control loop was set to 136.2 g/min, and the monomer 2 feed pump was set to 20 g/min, while pumping solvent. The temperature set point on the oil to the pre-heater was set to 150°C. An initiator solution was prepared by combining 400 g DTBP and 400 g DPM. The initiator solution was well mixed, and charged to the initiator tank. A monomer 1 solution was made by combining the following materials: 909 g Sty, 1143 g AMS, 723 g GAA, 202.5 g DPM, and 22.5 g DI water. The monomer solution was well mixed, and charged to the monomer 1 feed tank. A monomer 2 solution was made by combining the following materials: 1494 g Sty, and 1506 g GAA. The solution was well mixed, and charged to the monomer 2 feed tank. During the polymerization process, when the level in these tanks became low, a new batch of raw materials was charged. The initiator flow control loop was turned on to feed 3.8 g/min of the initiator solution to the injection point after the monomer 1 pre-heater. After 7 minutes, the monomer 1 pump feed source was switched from the solvent tank to the monomer 1 feed tank. The oil system set point was increased to 229°C. The outlet process temperature of reactor 1 was set to 225°C and the outlet process temperature of reactor 2 was set to 225°C.

After 24 minutes, the process stream was valved over from the Grove^{TM} valve, to the Badger^{TM} pressure regulating valve, through the line expansion, into the flash column, and then to downstream processing. The pressure control loop was set to 95 psig. The oil jacket on the line expansion after the Badger™ valve was set to 185°C. The flash vapor temperature was set to 180°C. The condenser on the flash vapor outlet stream was set to 50°C. The condensate was pumped to a recycle tank. The remaining condensable vapor stream was collected in vacuum traps packed in dry ice. The flash melt temperature was set to 190°C. The vacuum set point on the flash column was reduced from 0 psig to -10.5 psig over 12 minutes. 96 minutes after switching the monomer 1 pump over to the monomer 1 feed tank, the monomer 2 feed pump was switched to the monomer 2 feed tank. So that monomer from monomer feed tank 1 was entering the system before the first reactor and monomer from monomer feed tank 2 was entering the system between the first and second reactor. After 33 minutes, the flash condensate stream (M) and polymer (N) were sampled. The yield calculated to 87.3%. 75 minutes later the flash condensate stream (O) and polymer (P) were sampled again. The polymer was then collected for 15 minutes, and weighed. The average product rate was 144.4 g/min. The yield calculated to 86.8%. The average accumulation in the recycle tank was 17.7 g/min.

### EXAMPLE 6

The same equipment set-up as Example 1 was used except that only one Tranter Maxchanger (Model #-MX-06-0424-HP-012) plate heat exchanger was used. The heat exchanger had been modified to have 2 process channels, by 5 process passes, and custom Klingersil^{TM} gaskets. In this configuration the reactor has a nominal volume of 1600 ml, and an average residence time of 10 minutes at 160 ml/min.

The monomer feed pump was set to 156.9 g/min, while pumping solvent. The temperature set point on the oil to the pre-heater was set to 130°C. An initiator solution of 400 g DTAP was charged to the 1 gal initiator tank. A monomer solution was made by combining the following materials: 17.66 Ib 2-EHA, 1.79 Ib AMS, and 0.40 Ib GAA. The monomer solution was well mixed, and charged to the 5 gal monomer feed tank. During the polymerization process, when the level in these tanks became low, a new batch of raw materials was charged. A pump was turned on to feed 3.14 g/min of the initiator solution to the injection point after the pre-heater. After 15 minutes, the monomer pump feed source was switched from the solvent tank to the monomer tank. The oil system set point was increased to 243°C. The outlet process temperature of reactor 1 was set to 230°C. The pressure control loop was set to 95 psig. The oil jacket on the line expansion after the Badger^{TM} valve was set to 180°C. The flash vapor temperature was set to 220°C. The condenser on the flash vapor outlet stream was set to 70°C. The condensate was pumped to a recycle tank. The remaining condensable vapor stream was collected in vacuum traps packed in dry ice. The flash melt temperature heater was turned off. The vacuum set point on the flash column was reduced from 0 psig to -11.8 psig, in small increments. Polymer (Q) was pumped from the flash column by a gear pump, and collected.

Following are the sample characterizations for the liquid Polymer (Q) samples.
Meq AA/g = 0.30
Acid # = 17
Viscosity (cps) = 5,280
Mw = 3179
Mn =1543

## Claims

1. A continuous bulk polymerization process for preparing polymers comprising:
providing at least one reaction mixture comprising at least one monomer, wherein the reaction mixture contains substantially no solvent;
continuously feeding the reaction mixture to at least one non-cylindrical channel;
polymerizing the monomer in the non-cylindrical channel; and
continuously removing the polymer from the non-cylindrical channel;
wherein the temperature of the reaction mixture is controlled, and
wherein the non-cylindrical channel is not inside a reaction vessel.

2. The process according to Claim 1 wherein the non-cylindrical channel is in heat transfer proximity with another channel containing a temperature control medium.

3. The process according to Claim 1 wherein the temperature of the reaction mixture is controlled by continuously exposing the internal surface of the non-cylindrical channel to the reaction mixture, while simultaneously continuously exposing the external surface of the non-cylindrical channel to a temperature control medium.

4. The process according to Claim 3 wherein the non-cylindrical channel is formed by plates.

5. The process according to Claim 3 wherein the non-cylindrical channel is part of a heat exchanger selected from the group consisting of a plate-frame, plate-fin, and spiral-plate heat exchanger.

6. The process according to Claim 3 wherein the non-cylindrical channel is part of a plate-frame heat exchanger.

7. The process according to Claim 1 wherein the reaction mixture comprises an admixture of at least one monomer, and at least one initiator.

8. The process according to claim 1, wherein said reaction mixture comprises a monomer selected from the group consisting of styrene, α-methyl styrene, butyl acrylate, methyl methacrylate, and (meth)acrylic acid.

9. The process according to Claim 1 wherein at least two non-cylindrical channels are connected in a series or in parallel, and at least two reaction mixtures are fed to separate non-cylindrical channels.

10. The process according to Claim 9 wherein at least two of the non-cylindrical channels are operated at different temperatures.
